# EUROPEAN PATENT SPECIFICATION

(11) **EP 4 621 705 B1**
(45) Date of publication and mention of the grant of the patent: **30.09.2026**
(21) Application number: 25158887.7
(22) Date of filing: 19.02.2025
(51) Int. Cl.: G06T 3/4053

(54) **TECHNOLOGIES FOR UPSCALING DISPLAY IMAGE RESOLUTION**
TECHNOLOGIEN ZUR AUFWÄRTSSKALIERUNG DER AUFLÖSUNG VON ANZEIGEBILDERN
TECHNOLOGIES POUR AUGMENTER LA RÉSOLUTION D'IMAGE D'AFFICHAGE

(30) Priority: 20.03.2024 US 202418610546
(43) Date of publication of application: 24.09.2025
(73) Proprietor: INTEL Corporation, Santa Clara, CA 95054 (US)
(72) Inventor: SINHA, Vishal Ravindra, Santa Clara, 95054 (US); VAN BEEK, Petrus J., Santa Clara, 95054 (US); SAMEER KALATHIL, Perazhi, Santa Clara, 95054 (US); NIDAMANURI, Krishna Kishore, Santa Clara, 95054 (US); LEWIS, William John, Santa Clara, 95054 (US); PARIKH, Kunjal S., Santa Clara, 95054 (US); KURLAGUNDA, Ravi, Santa Clara, 95054 (US); BHATTACHARJEE, Susanta, Santa Clara, 95054 (US)
(74) Representative: Rummler, Felix

(56) References cited:
- US-A1- 2020 275 155
- US-A1- 2021 166 345
- US-A1- 2023 128 106

## Description

### BACKGROUND

The power requirement and performance of a compute device can be greatly dependent on the display resolution. A higher resolution can require more power and more compute resources, while providing a better user experience. A lower resolution can use less power and less compute resources, at the expense of a worse user experience. US 2020/0275155 A1 relates to a method of displaying an image in a display device, the method including transmitting, to a content providing device, image request information requesting the content providing device to selectively transmit an image of a first resolution or an image of a second resolution; receiving the image of the first resolution or the image of the second resolution which is obtained by performing upscaling on the image of the first resolution using a first upscaler, based on the image request information; based on receiving the image of the first resolution, performing upscaling on the image of the first resolution using a second upscaler of the display device to obtain a upscaled image having the second resolution and displaying the upscaled image having the second resolution, upscaling capability of the second upscaler being different from upscaling capability of the first upscaler; and based on receiving the image of the second resolution, displaying the image of the second resolution.

### BRIEF DESCRIPTION OF THE DRAWINGS

The invention is defined by the appended claims.
FIG. 1 is a simplified block diagram of at least one embodiment of a compute device for upscaling display image resolution.
FIG. 2 is a simplified block diagram of at least one embodiment of an environment that may be established by a compute device of FIG. 1.
FIG. 3 is a simplified data flow diagram of at least one embodiment of upscaling a frame that may be followed by a display of the compute device of FIG. 1.
FIG. 4 is a simplified data flow diagram of at least one embodiment of upscaling a frame that may be followed by a display of the compute device of FIG. 1.
FIGS. 5 and 6 are a simplified flow diagram of at least one embodiment of a method for upscaling display image resolution that may be executed by the compute device of FIG. 1.
FIG. 7 is a simplified flow diagram of at least one embodiment of a method for training a machine-learning-based algorithm for upscaling display image resolution that may be executed by the compute device of FIG. 1.

### DETAILED DESCRIPTION OF THE DRAWINGS

The invention is defined by the appended claims. While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on a transitory or non-transitory machine-readable (e.g., computer-readable) storage medium, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

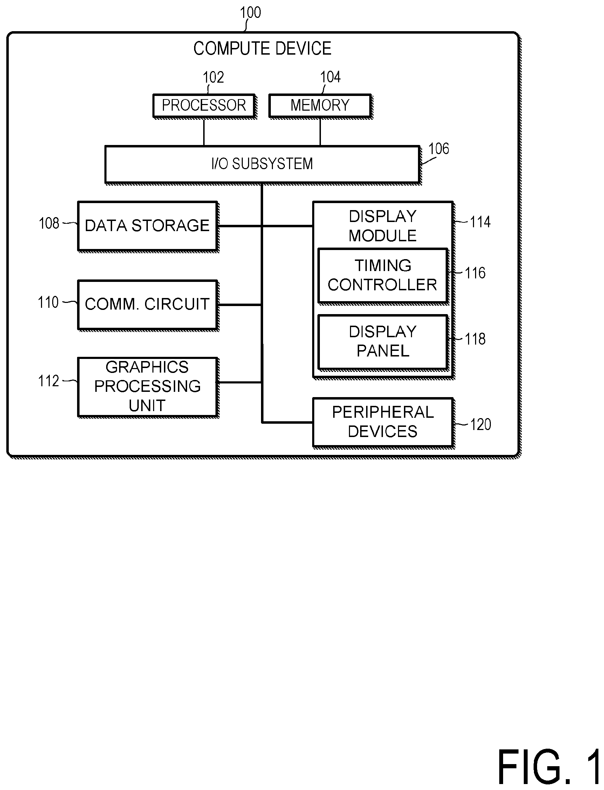

Referring now to FIG. 1, an illustrative compute device 100 includes a display module 114. In use, the display module 114 receives frames to be displayed on a display panel 118. A timing controller 116 performs a machine-learning-based algorithm to upscale the frames before they are displayed on the display panel 118. The timing controller 116 can use low-power circuitry to do so. For example, reducing the resolution of the frame sent to the display panel 118 may reduce the power of the compute device 100 (such as the power of the graphics processing unit 112) by, e.g., 1,100 milliwatts, and the circuitry that upscales the frame may use, e.g., 100 milliwatts, for a net reduction in power of 1,000 milliwatts.

As described in more detail below, the data flow for upscaling the frames may be executed by pipelining and/or fusing sequences of convolutional layers, so that a limited amount of intermediate data needs to be stored between layers. Such an approach allows for use of small local memories for intermediate data storage and reduces the required memory bandwidth. Reducing or eliminating using host memory or off-chip memory can further reduce the power requirement. The power-efficient machine-learning-based upscaling can reduce power consumption, increase the frame rate, and/or a combination of both. Additionally, using dedicated AI hardware in the display frees up valuable accelerator hardware elsewhere on the compute device 100.

FIG. 1 shows a simplified block diagram of a compute device 100. The compute device 100 may be embodied as any type of compute device. For example, the compute device 100 may be embodied as or otherwise be included in, without limitation, a server computer, an embedded computing system, a System-on-a-Chip (SoC), a multiprocessor system, a processor-based system, a consumer electronic device, a smartphone, a cellular phone, a desktop computer, a tablet computer, a notebook computer, a laptop computer, a network device, a router, a switch, a networked computer, a wearable computer, a handset, a messaging device, a camera device, a distributed computing system, and/or any other computing device. The illustrative compute device 100 includes a processor 102, a memory 104, an input/output (I/O) subsystem 106, data storage 108, communication circuitry 110, a graphics processing unit (GPU) 112, a display module 114, and one or more optional peripheral devices 120. In some embodiments, one or more of the illustrative components of the compute device 100 may be incorporated in, or otherwise form a portion of, another component. For example, the memory 104, or portions thereof, may be incorporated in the processor 102 in some embodiments.

In some embodiments, the compute device 100 may be located in a data center with other compute devices 100, such as an enterprise data center (e.g., a data center owned and operated by a company and typically located on company premises), managed services data center (e.g., a data center managed by a third party on behalf of a company), a colocated data center (e.g., a data center in which data center infrastructure is provided by the data center host and a company provides and manages their own data center components (servers, etc.)), cloud data center (e.g., a data center operated by a cloud services provider that host companies applications and data), and an edge data center (e.g., a data center, typically having a smaller footprint than other data center types, located close to the geographic area that it serves), a micro data center, etc.

The processor 102 may be embodied as any type of processor capable of performing the functions described herein. For example, the processor 102 may be embodied as a single or multi-core processor(s), a single or multi-socket processor, a digital signal processor, a graphics processor, a neural network compute engine, an image processor, a microcontroller, an infrastructure processing unit (IPU), a data processing unit (DPU), an xPU, or other processor or processing/controlling circuit. The processor 102 may include any suitable number of cores, such as any number from 1-1,024.

The memory 104 may be embodied as any type of volatile or non-volatile memory or data storage capable of performing the functions described herein. In operation, the memory 104 may store various data and software used during operation of the compute device 100, such as operating systems, applications, programs, libraries, and drivers. The memory 104 is communicatively coupled to the processor 102 via the I/O subsystem 106, which may be embodied as circuitry and/or components to facilitate input/output operations with the processor 102, the memory 104, and other components of the compute device 100. For example, the I/O subsystem 106 may be embodied as, or otherwise include, memory controller hubs, input/output control hubs, firmware devices, communication links (e.g., point-to-point links, bus links, wires, cables, light guides, printed circuit board traces, etc.) and/or other components and subsystems to facilitate the input/output operations. The I/O subsystem 106 may connect various internal and external components of the compute device 100 to each other with use of any suitable connector, interconnect, bus, protocol, etc., such as an SoC fabric, PCIe^{®}, USB2, USB3, USB4, NVMe^{®}, Thunderbolt^{®}, and/or the like. In some embodiments, the I/O subsystem 106 may form a portion of a system-on-a-chip (SoC) and be incorporated, along with the processor 102, the memory 104, the communication circuitry 110, and other components of the compute device 100 on a single integrated circuit chip.

The data storage 108 may be embodied as any type of device or devices configured for the short-term or long-term storage of data. For example, the data storage 108 may include any one or more memory devices and circuits, memory cards, hard disk drives, solid-state drives, or other data storage devices.

The communication circuitry 110 may be embodied as any type of interface capable of interfacing the compute device 100 with other compute devices, such as over one or more wired or wireless connections. In some embodiments, the communication circuitry 110 may be capable of interfacing with any appropriate cable type, such as an electrical cable or an optical cable. The communication circuitry 110 may be configured to use any one or more communication technology and associated protocols (e.g., Ethernet, Bluetooth^{®}, Wi-Fi^{®}, WiMAX, near field communication (NFC), 4G, 5G, etc.). The communication circuitry 110 may be located on silicon separate from the processor 102, or the communication circuitry 110 may be included in a multi-chip package with the processor 102, or even on the same die as the processor 102. The communication circuitry 110 may be embodied as one or more add-in-boards, daughtercards, network interface cards, controller chips, chipsets, specialized components such as a field-programmable gate array (FPGA) or application-specific integrated circuit (ASIC), or other devices that may be used by the compute device 100 to connect with another compute device. In some embodiments, communication circuitry 110 may be embodied as part of a system-on-a-chip (SoC) that includes one or more processors, or included on a multichip package that also contains one or more processors. In some embodiments, the communication circuitry 110 may include a network accelerator complex (NAC), which may include a local processor, local memory, and/or other circuitry on the communication circuitry 110. In such embodiments, the NAC may be capable of performing one or more of the functions of the processor 102 described herein. Additionally or alternatively, in such embodiments, the NAC of the communication circuitry 110 may be integrated into one or more components of the compute device 100 at the board level, socket level, chip level, and/or other levels.

The graphics processing unit 112 is configured to perform certain computing tasks, such as video or graphics processing. The graphics processing unit 112 may be embodied as one or more processors, data processing unit, field-programmable gate arrays (FPGAs), application-specific integrated circuits (ASICs), and/or any combination of the above. In some embodiments, the graphics processing unit 112 may send frames or partial update regions to the display module 114.

The display module 114 receives and displays images. The display module 114 includes a timing controller 116 and a display panel 118. The timing controller 116 receives data from other components of the compute device 100, such as the processor 102, the memory 104, the GPU 112, etc., synchronizes and processes the signals, and sends them to the display panel 118 for display. In an illustrative embodiment, the timing controller 116 includes an artificial intelligence (AI) accelerator. In an illustrative embodiment, the AI accelerator may be capable of 0.2 trillion operations per second (TOPS). In other embodiments, the AI accelerator may be capable of, e.g., 0.05-2 TOPs.

The display panel 118 may be embodied as any type of display panel on which information may be displayed to a user of the compute device 100, such as a touchscreen display, a liquid crystal display (LCD), a thin film transistor LCD (TFT-LCD), a light-emitting diode (LED) display, an organic light-emitting diode (OLED) display, a cathode ray tube (CRT) display, a plasma display, an image projector (e.g., 2D or 3D), a laser projector, a heads-up display, and/or other display technology. The display panel 118 may have any suitable resolution, such as 7680 x 4320, 3840 x 2160, 3000 x 2000, 2560 x 1440, 1920 x 1200, 1920 x 1080, 1366 x 768, etc.

In some embodiments, the compute device 100 may include other or additional components, such as those commonly found in a compute device. For example, the compute device 100 may also have peripheral devices 120, such as a keyboard, a mouse, a speaker, a microphone, a display, a camera, a battery, an external storage device, etc.

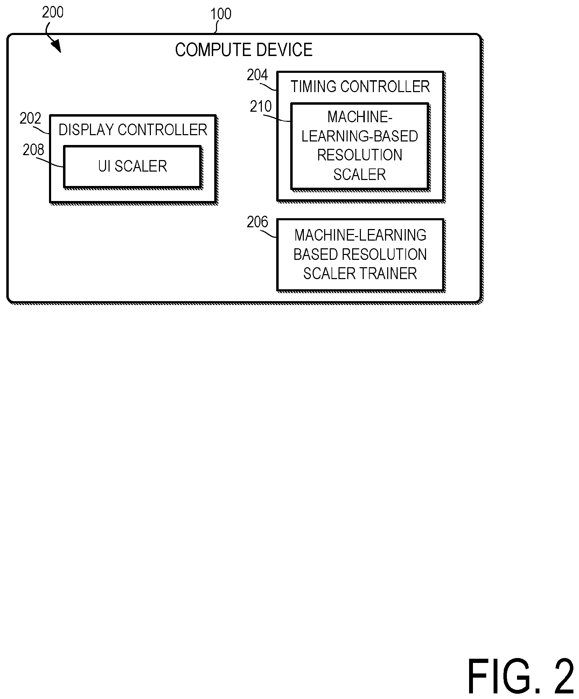

Referring now to FIG. 2, in an illustrative embodiment, the compute device 100 establishes an environment 200 during operation. The illustrative environment 200 includes a display controller 202, a timing controller 204, and a machine-learning-based resolution scaler trainer 206. The various modules of the environment 200 may be embodied as hardware, software, firmware, or a combination thereof. For example, the various modules, logic, and other components of the environment 200 may form a portion of, or otherwise be established by, the processor 102 or other hardware components of the compute device 100 such as the memory 104, the data storage 108, the display module 114, etc. As such, in some embodiments, one or more of the modules of the environment 200 may be embodied as circuitry or collection of electrical devices (e.g., display controller circuitry 202, timing controller circuitry 204, and machine-learning-based resolution scaler trainer circuitry 206, etc.). In some embodiments, some or all of the modules of the environment 200 may be embodied as, e.g., a field programmable gate array (FPGA), an application-specific integrated circuit (ASIC), an accelerator device, and/or the like. It should be appreciated that, in some embodiments, one or more of the circuits (e.g., the display controller circuitry 202, the timing controller circuitry 204, and the machine-learning-based resolution scaler trainer circuitry 206, etc.) may form a portion of one or more of the processor 102, the memory 104, the I/O subsystem 106, the data storage 108, the GPU 112, the display module 114, and/or other components of the compute device 100. For example, in some embodiments, some or all of the modules may be embodied as the processor 102 as well as the memory 104 and/or data storage 108 storing instructions to be executed by the processor 102. Additionally, in some embodiments, one or more of the illustrative modules may form a portion of another module and/or one or more of the illustrative modules may be independent of one another. Further, in some embodiments, one or more of the modules of the environment 200 may be embodied as virtualized hardware components or emulated architecture, which may be established and maintained by the processor 102 or other components of the compute device 100. It should be appreciated that some of the functionality of one or more of the modules of the environment 200 may require a hardware implementation, in which case embodiments of modules that implement such functionality will be embodied at least partially as hardware.

The display controller 202, which may be embodied as hardware, firmware, software, virtualized hardware, emulated architecture, and/or a combination thereof as discussed above, is configured to control various aspects of what is displayed on the display module 114 and interfacing with the display module 114. The display controller 202 is configured to determine whether to enable upscaling. The display controller 202 may, e.g., read a setting in a basic input/output system (BIOS) or system firmware on boot-up of the compute device 100, read a user preference, receive an instruction from a user, receive an instruction to reduce power or resource usage, receive an instruction to increase a frame rate, and/or the like.

If upscaling should be enabled, the display controller 202 enables upscaling on the display module 114, such as by sending a command to the display module 114 to enable upscaling. The display controller 202 may indicate a scaling factor, such as indicating that the display module 114 should upscale the height and the width by, e.g., a factor of 2. In some embodiments, other scaling factors may be used, such as 3 or 4. The scaling factor may be a fraction, such as 1.33, 1.5, etc. In the illustrative embodiment, the horizontal scaling is the same as the vertical scaling. In other embodiments, the horizontal scaling may be different from the vertical scaling.

In an illustrative embodiment, as part of enabling upscaling, the display controller 202 lowers the resolution of frames sent to the display module 114, such as by instructing the GPU 112 to change a resolution. The display controller 202 may change the resolution to another resolution that the display module 114 has indicated is supported in a detail timing descriptor (DTD) of an extended display identifier data (EDID) sent by the display module 114. In the illustrative embodiment, the resolution is automatically reduced when upscaling is enabled, so that the final resolution on the display panel 118 is not changed. For example, if the resolution is ultra-high definition (UHD) (3840 x 2160P) when upscaling is enabled, the display controller 202 may change the resolution to high definition (FHD) (1920 x 1080P). The FHD frames may then be upscaled by the display module 114 to UHD. It should be appreciated that lowering the resolution may lower the power used by certain components of the compute device to generate the frames for display, such as the GPU 112 or the processor 102.

The display controller 202 may take other actions along with lowering the resolution. For example, a UI scaler 208 of the display controller 202 may instruct or otherwise cause a component of the compute device, such as the operating system (OS), to increase the display dots per inch (DPI) setting. The OS may use the display DPI setting to scale the user interface (UI) to be the same or similar physical size on the display module 114 at the new resolution. For example, at an UHD resolution, the OS may use a scaling factor of 300%. When the resolution is changed to a FHD resolution, the OS may change the scaling factor to 150%.

In some embodiments, as part of enabling upscaling, the display controller 202 may reduce the bandwidth of a link with the display module 114. For example, the display controller 202 may instruct the GPU 112 to change to a slower link rate per lane on an embedded Display Port (eDP) link and/or may change to using fewer lanes on the eDP link. Reducing the bandwidth of the link with the display module 114 may use less power at both the transmit and receive sides of the link with the display module 114.

The timing controller 204, which may be embodied as hardware, firmware, software, virtualized hardware, emulated architecture, and/or a combination thereof as discussed above, is configured to receive data from other components of the compute device 100, such as the processor 102, the memory 104, the GPU 112, etc., synchronize and process the signals, and send them to the display panel 118 for display. In some embodiments, the timing controller 204 may be embodied as the timing controller 116.

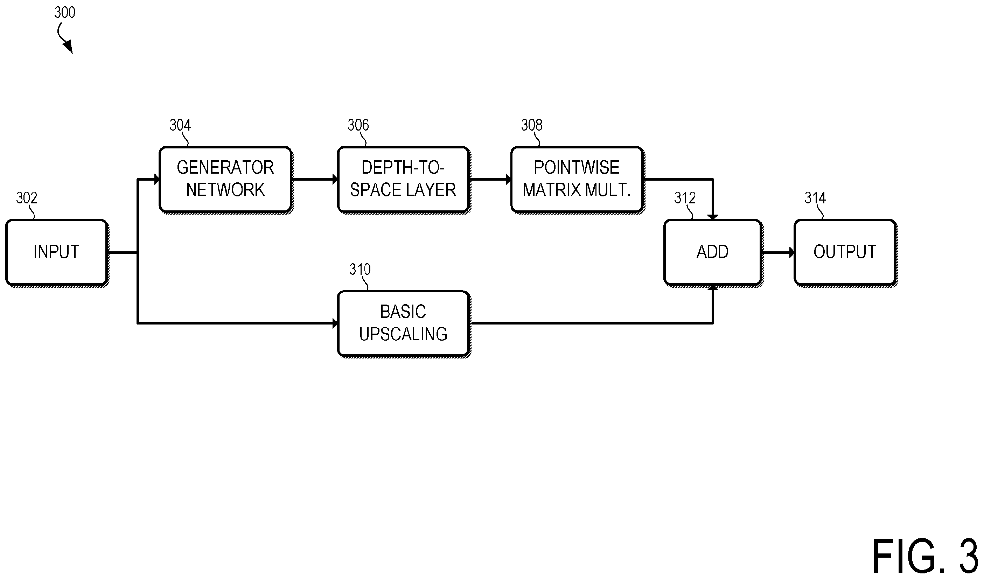

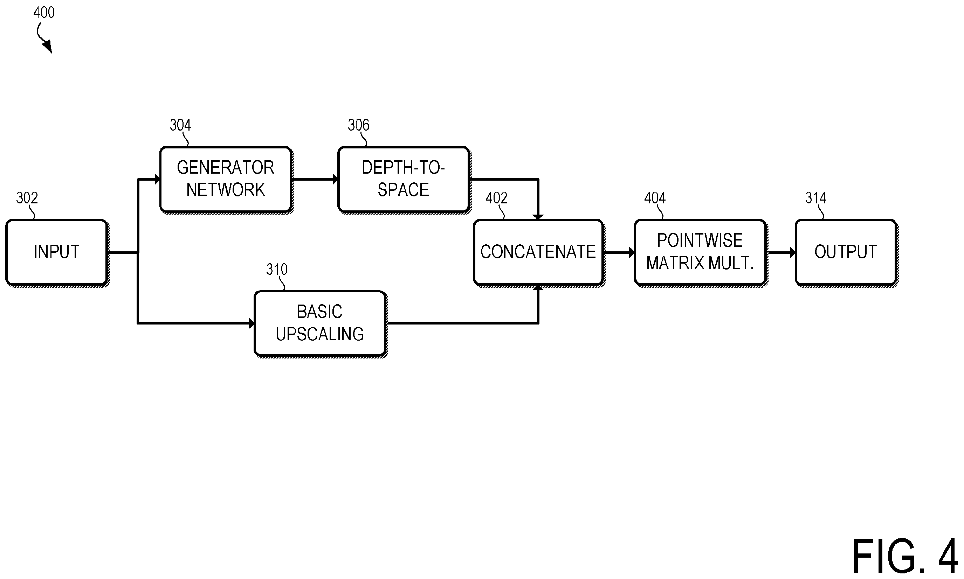

In use, the timing controller 204 receives a frame streamed from another compute device 100, such as the GPU 112. The timing controller 204 includes a machine-learning-based resolution scaler 210. In an illustrative embodiment, the timing controller 204 buffers several lines of the frame, and then the machine-learning-based resolution scaler 210 upscales a set of lines, as described below in more detail in regard to FIGS. 3 and 4. After upscaling a set of lines of the frame, the timing controller 204 passes the upscaled lines to the display panel 118 for display. The timing controller 204 continues upscaling a set of lines of the frame at a time until the entire frame is upscaled. The timing controller 204 then waits for the next frame to be received.

The machine-learning-based resolution scaler trainer 206, which may be embodied as hardware, firmware, software, virtualized hardware, emulated architecture, and/or a combination thereof as discussed above, is configured to train the machine-learning-based resolution scaler 210. Although the machine-learning-based resolution scaler trainer 206 is described as being part of the compute device 100, it should be appreciated that the function of the machine-learning-based resolution scaler trainer 206 may be performed on a different compute device, and the results may then be supplied to the display module 114, such as at a manufacture time, as part of updating firmware, etc.

The machine-learning-based resolution scaler trainer 206 determines one or more images to use for training. The machine-learning-based resolution scaler trainer 206 may determine training images that are tailored to PC content and results in high visual quality. The training images may be focused on high-quality desktop content with sharp features (e.g., sharp lines, edges, contours, etc.), such as test and 2D graphics. The machine-learning-based resolution scaler trainer 206 may access saved training images, may use an algorithm to generate training images, etc. The training images may include images at any suitable resolution, such as every resolution that the display module 114 is capable of displaying. In some embodiments, the training images may be provided at a higher resolution, and the machine-learning-based resolution scaler trainer 206 may downscale the images in order to train the upscaling algorithm.

The machine-learning-based resolution scaler trainer 206 trains the machine-learning-based algorithm using the determined training images. The machine-learning-based resolution scaler trainer 206 trains, e.g., the convolutional neural network in the generator network 304, the pointwise matrix multiply layer 308, and/or the pointwise matrix multiply layer 404, described below in regard to FIGS. 3 and 4. Once training is complete, the machine-learning-based resolution scaler trainer 206 applies the training values, such as by loading the training values into the display module 114.

Referring now to FIG. 3, in one embodiment, a data flow diagram 300 depicts one embodiment of data flow in the timing controller 204. In block 302, the timing controller 204 receives a set of lines from a transmitter, such as the GPU 112. In an illustrative embodiment, the timing controller 204 stores the streamed frame in a remote frame buffer. The frame may be stored in the remote frame buffer at the resolution that it is received from the transmitter, i.e., at a lower resolution, before upscaling. Storing the frame at the lower resolution can further reduce power requirements. The timing controller 204 may operate on any suitable number of lines at a time, such as 1-16 lines. In an illustrative embodiment, the timing controller 204 operates on four lines at a time. In some embodiments, the timing controller 204 may include nearby lines as context as it is processing a set of lines for upscaling.

In the illustrative embodiment, the set of lines is processed in two branches. In a first branch, represented by blocks 304-308, luminance (i.e., brightness) information is upscaled using a convolutional neural network. In the second branch, represented by block 310, a simpler upscaling algorithm is applied to chrominance (i.e., color) information.

In the first branch, the set of lines are provided as an input to a generator network 304, which is embodied as a convolutional neural network. The generator network 304 accepts as an input a number of pixels equal to the width times the height of the set of lines with a 3-channel depth, such as a red, green, and blue (RGB) value for each pixel. The generator network 304 generates multiple channels at the input resolution. In an illustrative embodiment, the generator network 304 generates *k*² channels, where *k* is equal to a scaling dimension. For example, *k* = 2 would upscale the width and height by a factor of two. The first branch also includes a depth-to-space layer 306 (or pixel-shuffle layer), which rearranges the *k*² channels from the generator network into a *k* by *k* spatial block in a single channel. In some embodiments, the generator network 304 may produce multiples of channels, such as 8, 12, 16, etc., when *k =* 2, or 18, 27, 36, etc., when *k =* 3.

The first branch in the data flow 300 generates detailed information in the luminance (brightness) component of the frame. As the human visual system is significantly more sensitive to high-frequency information in the luminance component relative to high-frequency information in the chrominance (color) components, applying most of the computation to the generator network 304 in the first branch and focusing on luminance reduces power consumption significantly.

The generator network 304 is fully trainable and is capable of learning optimal color transformations implicitly in its convolutional weights, without any explicit color conversion from RGB to a standard luminance-chrominance color space (for example, YUV or YCbCr) or vice versa.

The second branch in the two-branch data flow 300 contains a basic upscaling layer 310, which is directly applied to the 3 channels of the (RGB) input image, increasing the spatial size by a factor of *k* in both spatial dimensions. The basic upscaling layer 310 primarily upscales the chrominance (color) information. The basic upscaling layer 310 include a low-complexity processing method, such as upscaling with nearest-neighbor interpolation or bilinear interpolation. Nearest-neighbor interpolation is implemented by simple pixel replication, horizontally and vertically, and requires essentially no calculation. The processing is deliberately designed to be simple to reduce power consumption, exploiting the fact that human visual system is significantly less sensitive to high-frequency detail in color (chrominance) components of the image.

The second branch upscales the chrominance component but also provides a simple upscaled version of the luminance component, as the basic upscaling layer is applied to the RGB input image. This allows the computation in the first branch to focus on the so-called residual information of the (pseudo-)luminance, i.e., the first branch does not have to calculate the full signal at both high and low frequencies. Rather, the first branch can focus on the high frequency detail information only. This again allows the number of channels processed and generated in the first branch to be very low and allows the computational cost of the data flow 300 to be reduced.

The data flow 300 further includes a block 312 that combines channels from the first and second branches at the higher resolution. In the first branch, the data first passes through a pointwise matrix multiplication layer 308 stage that includes a pointwise matrix-multiply layer (with trainable coefficients) to generate a 3-channel output at the higher resolution. This stage only uses pointwise (element-wise) calculations and avoids convolutions with a spatial filter, which would have high computational cost when applied at the increased resolution. This stage generates pixel values in the RGB color space, without using any explicit or fixed color transform. All convolution and multiplication weights in the network are learned via training.

The output of the pointwise matrix multiply layer 308 is then added to the output of the basic upscaling layer 310 in block 312. The sum from the add block 312 is then provided to the output 314, which may be passed to the display panel 118 for display.

Referring now to FIG. 4, in one embodiment, an alternate data flow 400 is shown. The input 302, generator network 304, depth-to-space layer 306, and basic upscaling layer 310 may be similar or the same as the corresponding component of the data flow 300, a description of which will not be repeated in the interest of clarity. The output of the depth-to-space layer 306 and the basic upscaling layer 310 may be concatenated in block 402, creating a higher-resolution image with four channels (one from the depth-to-space layer 306 and three from the basic upscaling layer 310). The higher-resolution image with four channels is passed to the pointwise matrix multiply layer 404, which performs a similar operation as the matrix multiply layer 404, although trained to perform a different operation. The output of the matrix multiply layer 404 is then passed to the output 314.

The data flows 300, 400 described above contain a relatively small number of trainable weights compared to a state-of-the-art super-resolution upscaling network. The number of convolutional stages and the number of channels are both small compared to state-of-the-art networks. It is important to train the network with an appropriate data set, in order to improve the visual quality on the type of content that is most relevant and provides the largest impact on subjective visual quality. The network is trained with a data set that is tailored to PC content and results in high visual quality. The data set is focused on high-quality desktop content with sharp features (sharp lines, edges, contours) such as text and (2-D) graphics.

In an illustrative embodiment, the weights and activations of some or all of the neural networks in the data flows 300, 400 are quantized to 8-bit precision, enabling int8 fixed-point computation and memories. Such an approach results in significant power savings and/or frame processing throughput compared to executing the network in floating-point representation. The structure of the two-branch network enables quantization of weights and activations at 8-bit precision while achieving good image quality.

The data flows 300, 400 may operate at any suitable resolution, such as upscaling from FHD to UHD, or upscaling from any lower resolution to any higher resolution disclosed herein. The data flows 300, 400 may operate at any suitable frame rate, such as 24 frames per second (FPS), 30 FPS, 60 FPS, 120 FPS, 240 FPS, etc. The hardware that implements the data flows 300, 400 (e.g., the machine-learning-based resolution scaler 210) may operate at any suitable power level, such as 50-500 milliwatts. In one embodiment, the machine-learning-based resolution scaler 210 can upscale from FHD to UHD at 60 FPS at high quality using less than 100 milliwatts.

In some embodiments, the display module 114 may refresh the image being displayed without receiving any additional data from another component of the compute device 100, such as by using panel self-refresh of, e.g., embedded DisplayPort (eDP) version 1.4, 1.5, etc. In an illustrative embodiment, the frame is stored in a remote frame buffer at the lower resolution, and the machine-learning-based resolution scaler 210 continually upscales the frame stored in the remote frame buffer from the lower resolution to the higher resolution. Additionally or alternatively, a remote frame buffer may store the output of the machine-learning-based resolution scaler 210. In such an embodiment, if the frame is not updated, the machine-learning-based resolution scaler 210 does not need to continue to operate in order to keep showing the frame at the high resolution. In some cases, the data streamed to the display module 114 may be encoded or compressed, such as by using Display Stream Compression (DSC). In some embodiments, the machine-learning-based resolution scaler 210 or another component may decompress the image before the scaling algorithm is applied. In some cases, the DSC compression may be reapplied after the scaling algorithm upscales the frame and before the frame is stored in a remote frame buffer. In some embodiments, the display module 114 may receive a partial frame update. In such embodiments, the machine-learning-based resolution scaler 210 may upscale part of the frame based on the part of the frame that is updated, such as by upscaling only the part of the frame that changed or upscaling the part that changed plus, e.g., an adjacent 1-10 pixels. The upscaled part of the frame may be written to a remote frame buffer for refreshing the display panel 118.

Tests of the algorithms presented above show good performance compared to conventional upscaling at far less power than current high-end upscaling. Table 1 shows the performance of various algorithms over an evaluation data set of 250 images. The table shows the performance of conventional bicubic+Lanczos upscaling, a high-power GAN, and various implementations of the present algorithm. The performance is shown for the present algorithm with floating point weights and activations, int8 weights and floating point activations, and int8 weights and activations. The table shows peak signal-to-noise ratio (PSNR), PSNR in the Y (luminance) channel (PSNR-Y), structural similarity index on the luminance channel (SSIM-Y), and learned perceptual image patch similarity (LPIPS). For PSNR, PSNR-Y, and SSIM-Y, higher is better, and for LPIPS, lower is better. As shown in the table, the current algorithm at int8 weights performs better than conventional scaling, about the same as the current algorithm with floating point operations. The current algorithm operates at about one one-thousandth of the power required for a high-power GAN network.

**Table 1:**

| Algorithm | Weights | Activations | PSNR | PSNR-Y | SSIM-Y | LPIPS |
|---|---|---|---|---|---|---|
| Bicubic+Lanczos | | | 27.74 | 27.89 | 0.946 | 0.087 |
| High-power GAN | float32 | float32 | 34.87 | 35.19 | 0.979 | 0.014 |
| Current algorithm | float32 | float32 | 28.93 | 29.25 | 0.96 | 0.031 |
| Current algorithm | int8 | float32 | 28.94 | 29.27 | 0.959 | 0.031 |
| Current algorithm | int8 | int8 | 28.93 | 29.26 | 0.959 | 0.031 |

It should be appreciated that the data flows 300, 400 described above are merely one possible embodiment, and other possibilities are envisioned as well. For example, in one embodiment, the data flows 300, 400 may process the frame in segments in a different manner, such as using block-based or tile-based processing rather than line-based processing. In another embodiment, precision other than int8 may be used, such as int16 or floating point. In one embodiment, an entire frame may be upscaled all at once.

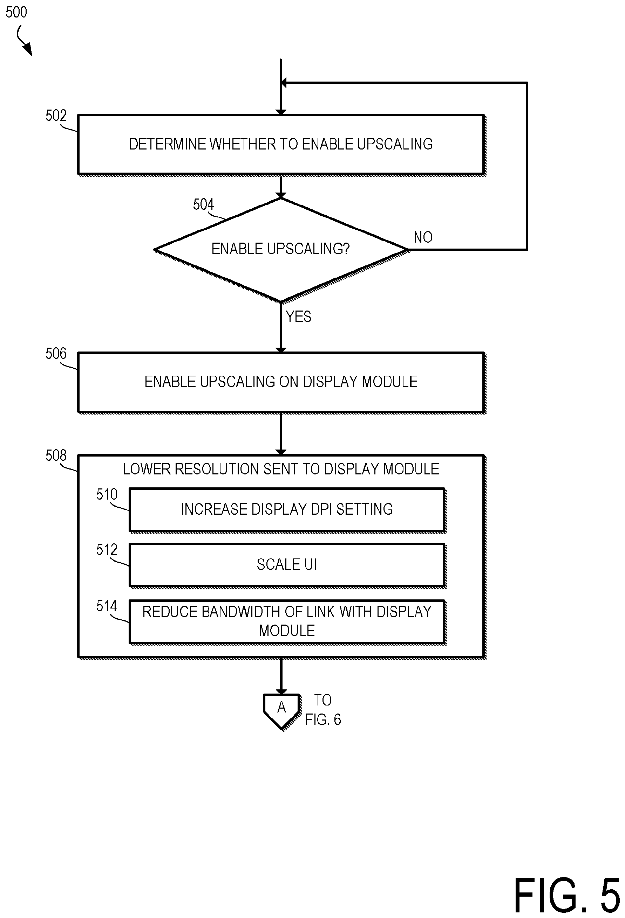

Referring now to FIG. 5, in use, a compute device 100 may execute a method 500 for upscaling display images. The method 500 begins in block 502, in which the compute device 100 determines whether to enable upscaling. Upscaling may be enabled on boot-up, such as by reading a setting in a basic input/output system (BIOS) or system firmware, by reading a user preference, by receiving an instruction from a user, by receiving an instruction to reduce power or resource usage, by receiving an instruction to increase a frame rate, and/or the like.

In block 504, if upscaling is not enabled, the method 500 loops back to block 502 to continue checking if upscaling is enabled. If upscaling is enabled, the method 500 proceeds to block 506, in which the compute device 100 enables upscaling on the display module 114, such as by sending a command to the display module 114 to enable upscaling. The compute device 100 may indicate a scaling factor, such as indicating that the display module 114 should upscale the height and the width by, e.g., a factor of 2. In some embodiments, other scaling factors may be used, such as 3 or 4. The scaling factor may be a fraction, such as 1.33, 1.5, etc. In the illustrative embodiment, the horizontal scaling is the same as the vertical scaling. In other embodiments, the horizontal scaling may be different from the vertical scaling.

In block 508, a component of the compute device 100, such as the GPU 112, lowers the resolution of frames sent to the display module 114. The compute device 100 may change the resolution to another resolution that the display module 114 has indicated is supported in a detail timing descriptor (DTD) of an extended display identifier data (EDID) sent by the display module 114. In the illustrative embodiment, the resolution is automatically reduced when upscaling is enabled, so that the final resolution on the display panel 118 is not changed. For example, if the resolution is ultra-high definition (UHD) (3840 x 2160P) when upscaling is enabled, the compute device 100 may change the resolution to high definition (FHD) (1920 x 1080P). The FHD frames may then be upscaled by the display module 114 to UHD. It should be appreciated that lowering the resolution may lower the power used by certain components of the compute device to generate the frames for display, such as the GPU 112 or the processor 102.

The compute device 100 may take other actions along with lowering the resolution. In block 510, a component of the compute device, such as the operating system (OS), may increase the display dots per inch (DPI) setting. The OS may use the display DPI setting in block 512 to scale the user interface (UI) to be the same or similar physical size on the display module 114 at the new resolution. For example, at an UHD resolution, the OS may use a scaling factor of 300%. When the resolution is changed to a FHD resolution, the OS may change the scaling factor to 150%.

In block 514, a component of the compute device 100, such as the processor 102 or GPU 112, may reduce the bandwidth of a link with the display module 114. For example, the GPU 112 may change to a slower link speed on an embedded Display Port (eDP) link and/or may change to using few lanes on the eDP link. Reducing the bandwidth of the link with the display module 114 may use less power at both the transmit and receive sides of the link with the display module 114.

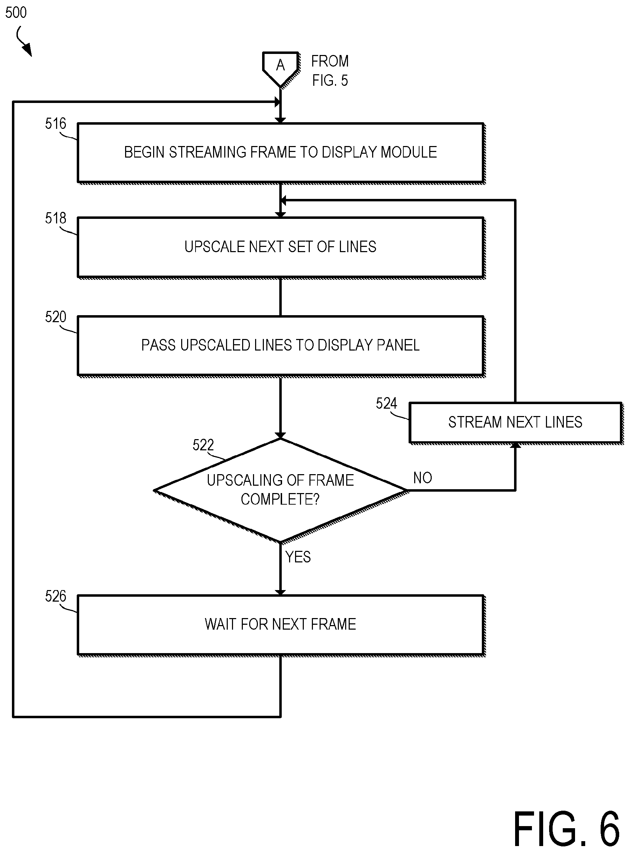

Referring now to FIG. 6, in block 516, the compute device 100 begins streaming a frame to the display module 114. In block 518, after buffering several lines of the frame, the timing controller 116 upscales a set of lines, as described above in more detail in regard to FIGS. 3 and 4. In block 520, the timing controller 116 passes the upscaled lines to the display panel 118 for display.

In block 522, if the upscaling of the frame is not complete, the method 500 continues in block 524, in which the timing controller 116 streams the next set of lines. The method 500 then loops back to block 518 to upscale the next set of lines. If the upscaling of the frame is complete, the method 500 continues to block 526, in which the timing controller 116 waits for the next frame to begin streaming. When it is time for the next frame to begin streaming, the method 500 loops back to block 516 to begin streaming the next frame to the display module 114.

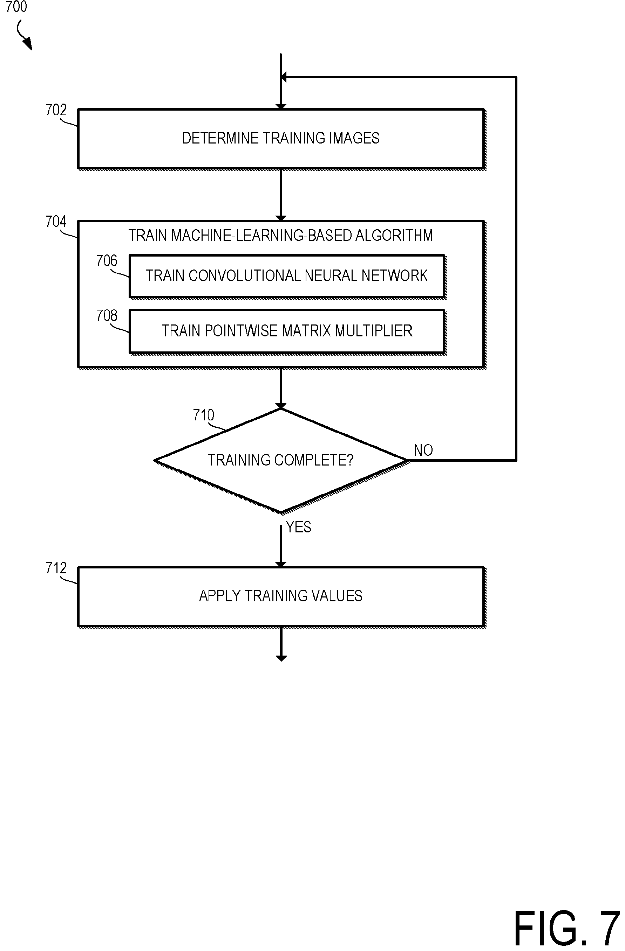

Referring now to FIG. 7, in use, a compute device 100 may execute a method 700 for training to upscale images. Although the method 700 is described as being performed by the compute device 100, it should be appreciated that the method 700 may be performed on a different compute device, and the results may then be supplied to the display module 114, such as at a manufacture time, as part of updating firmware, etc.

The method 700 begins in block 702, in which the compute device 100 determines one or more training images. The compute device 100 may determine training images that are tailored to PC content and results in high visual quality. The training images may be focused on high quality desktop content with sharp features (e.g., sharp lines, edges, contours, etc.), such as test and 2D graphics. The compute device 100 may access saved training images, may use an algorithm to generate training images, etc. The training images may include images at any suitable resolution, such as every resolution that the display module 114 is capable of displaying. In some embodiments, the training images may be provided at a higher resolution, and the compute device 100 may downscale the images in order to train the upscaling algorithm.

In block 704, the compute device 100 trains the machine-learning-based algorithm. In block 706, the compute device 100 trains the convolutional neural network in the generator network 304. In block 708, the compute device 100 trains the pointwise matrix multiply layer 308 and/or the pointwise matrix multiply layer 404.

In block 710, if training is not complete, the method 700 loops back to block 702, in which the compute device 100 determines the next set of training images. If training is complete, the method 700 proceeds to block 712, in which the training values are applied, such as by loading the training values into the display module 114.

The AI-based Display Super-Resolution solution enables upscaling of Full HD resolution display content to Ultra HD display content at 60 frames/sec, at ultra-low-power (less than 100 milliwatts), with an ultra-low memory footprint, and at high visual quality. This ultra-low-power super-resolution technology is a combination of a highly compact neural network model, intelligent model training and quantization, and optimized neural network inference hardware, all focused on delivering visual quality where it counts the most. The DSR neural net architecture generates high visual quality upscaling results with highly limited compute resources, by pipelining a reduced number of convolution stages, using a reduced number of tensor channels, and with arithmetic precision restricted to int8.

## Claims

1. A display module (114) comprising:
a timing controller (116, 204) to:
receive a frame for display on a display panel (118);
implement a machine-learning-based algorithm (210) to upscale the frame to generate an upscaled frame; and
send the upscaled frame to the display panel (118),
wherein to implement the machine-learning-based algorithm (210) comprises to:
upscale (304) a luminance channel of the frame using a convolutional neural network to generate an upscaled luminance frame;
upscale (310) a plurality of color channels of the frame to generate an upscaled chrominance frame without use of a neural network; and
combine (312) the upscaled luminance frame and the upscaled chrominance frame to generate the upscaled frame.

2. The display module (114) of claim 1, wherein the machine-learning-based algorithm (210) comprises a convolutional neural network.

3. The display module (114) of claim 1, wherein the timing controller (116, 204) is able to use the machine-learning-based algorithm (210) to upscale frames from a resolution of about 1920 x 1080 to a resolution of about 3840 x 2160 at about 60 frames per second using less than about 150 milliwatts of power.

4. The display module (114) of claim 1, wherein the timing controller (116, 204) is to:
receive a first segment of the frame; and
implement the machine-learning-based algorithm (210) to upscale the first segment of the frame while receiving a second segment of the frame.

5. A method comprising:
generating, by a compute device, a frame;
sending, by the compute device, the frame to a display module (114);
implementing, by the display module (114), a machine-learning-based algorithm (210) to upscale the frame to generate an upscaled frame; and
displaying, by the display module (114), the upscaled frame on a display panel (118) of the display module (114);
determining (502), by the compute device and prior to generating the frame, to begin implementation of upscaling; and
changing (514), by the compute device and in response to the determination to begin implementation of upscaling, a bandwidth of a link between the display module (114) and another component of the compute device.

6. The method of claim 5, wherein the machine-learning-based algorithm (210) comprises a convolutional neural network.

7. The method of claim 5, wherein the display module (114) is able to use the machine-learning-based algorithm (210) to upscale frames from a resolution of about 1920 x 1080 to a resolution of about 3840 x 2160 at about 60 frames per second using less than about 150 milliwatts of power.

8. The method of claim 5, further comprising:
receiving, by the display module (114), a first segment of the frame; and
implementing, by the display module (114), the machine-learning-based algorithm (210) to upscale the first segment of the frame while receiving a second segment of the frame.

9. The method of claim 5, wherein implementing the machine-learning-based algorithm (210) comprises:
upscaling (304) a luminance channel of the frame using a convolutional neural network to generate an upscaled luminance frame;
upscaling (310) a plurality of color channels of the frame to generate an upscaled chrominance frame; and
combining (312) the upscaled luminance frame and the upscaled chrominance frame to generate the upscaled frame.

10. The method of claim 9, wherein upscaling the plurality of color channels of the frame to generate the upscaled chrominance frame comprises upscaling the plurality of color channels of the frame to generate the upscaled chrominance frame without use of a neural network.

11. The method of claim 5, wherein implementing, by the display module (114), the machine-learning-based algorithm (210) to upscale the frame to generate the upscaled frame comprises implementing, by a timing controller (116, 204) of the display module (114), the machine-learning-based algorithm (210) to upscale the frame to generate the upscaled frame.

12. One or more computer-readable media comprising a plurality of instructions stored thereon that, when executed, causes a compute device to perform the method of any of claims 5-11.

## Patentansprüche

1. Anzeigemodul (114), umfassend:
eine Zeitsteuereinheit (116, 204) zum:
Empfangen eines Einzelbildes für eine Anzeige auf einem Anzeigefeld (118);
Implementieren eines auf einem maschinellen Lernen basierten Algorithmus (210) zum Hochskalieren des Einzelbildes, um ein hochskaliertes Einzelbild zu erzeugen; und
Senden des hochskalierten Einzelbildes zu dem Anzeigefeld (118),
wobei das Implementieren des auf einem maschinellen Lernen basierten Algorithmus (210) umfasst:
Hochskalieren (304) eines Luminanzkanals des Einzelbildes unter Verwendung eines neuronalen Faltungsnetzwerks, um ein hochskaliertes Luminanz-Einzelbild zu erzeugen;
Hochskalieren (310) einer Mehrzahl von Farbkanälen des Einzelbildes, um ein hochskaliertes Chrominanz-Einzelbild ohne Verwendung eines neuronalen Netzwerks zu erzeugen; und
Kombinieren (312) des hochskalierten Luminanz-Einzelbildes und des hochskalierten Chrominanz-Einzelbildes, um das hochskalierte Einzelbild zu erzeugen.

2. Anzeigemodul (114) nach Anspruch 1, wobei der auf einem maschinellen Lernen basierte Algorithmus (210) ein neuronales Faltungsnetzwerk umfasst.

3. Anzeigemodul (114) nach Anspruch 1, wobei die Zeitsteuereinheit (116, 204) in der Lage ist, den auf einem maschinellen Lernen basierten Algorithmus (210) zu verwenden, um Einzelbilder von einer Auflösung von ungefähr 1920 x 1080 auf eine Auflösung von ungefähr 3840 x 2160 bei ungefähr 60 Einzelbildern pro Sekunde bei einem Verbrauch von weniger als etwa 150 Milliwatt Leistung hochzuskalieren.

4. Anzeigemodul (114) nach Anspruch 1, wobei die Zeitsteuereinheit (116, 204) geeignet ist zum: Empfangen eines ersten Segments des Einzelbildes; und Implementieren des auf einem maschinellen Lernen basierten Algorithmus (210), um das erste Segment des Einzelbildes hochzuskalieren, während ein zweites Segment des Einzelbildes empfangen wird.

5. Verfahren, umfassend:
Erzeugen, durch eine Computervorrichtung, eines Einzelbildes;
Senden des Einzelbildes von der Computervorrichtung zu einem Anzeigemodul (114);
Implementieren, durch das Anzeigemodul (114), eines auf einem maschinellen Lernen basierten Algorithmus (210) zum Hochskalieren des Einzelbildes, um ein hochskaliertes Einzelbild zu erzeugen; und
Anzeigen, durch das Anzeigemodul (114), des hochskalierten Einzelbildes auf einem Anzeigefeld (118) des Anzeigemoduls (114);
Bestimmen (502), durch die Computervorrichtung und vor dem Erzeugen des Einzelbildes, dass mit der Implementierung des Hochskalierens begonnen wird; und
Ändern (514), durch die Computervorrichtung und als Reaktion auf das Bestimmen, dass mit der Implementierung des Hochskalierens begonnen wird, einer Bandbreite einer Verbindung zwischen dem Anzeigemodul (114) und einer anderen Komponente der Computervorrichtung.

6. Verfahren nach Anspruch 5, wobei der auf einem maschinellen Lernen basierten Algorithmus (210) ein neuronales Faltungsnetzwerk umfasst.

7. Verfahren nach Anspruch 5, wobei das Anzeigemodul (114) in der Lage ist, den auf einem maschinellen Lernen basierten Algorithmus (210) zu verwenden, um Einzelbilder von einer Auflösung von ungefähr 1920 x 1080 auf eine Auflösung von ungefähr 3840 x 2160 bei ungefähr 60 Einzelbildern pro Sekunde bei einem Verbrauch von weniger als etwa 150 Milliwatt Leistung hochzuskalieren.

8. Verfahren nach Anspruch 5, das ferner umfasst:
Empfangen, in dem Anzeigemodul (114), eines ersten Segments des Einzelbildes; und
Implementieren, durch das Anzeigemodul (114), des auf einem maschinellen Lernen basierten Algorithmus (210), um das erste Segment des Einzelbildes hochzuskalieren, während ein zweites Segment des Einzelbildes empfangen wird.

9. Verfahren nach Anspruch 5, wobei das Implementieren des auf einem maschinellen Lernen basierten Algorithmus (210) umfasst:
Hochskalieren (304) eines Luminanzkanals des Einzelbildes unter Verwendung eines neuronalen Faltungsnetzwerks, um ein hochskaliertes Luminanz-Einzelbild zu erzeugen;
Hochskalieren (310) einer Mehrzahl von Farbkanälen des Einzelbildes, um ein hochskaliertes Chrominanz-Einzelbild zu erzeugen; und
Kombinieren (312) des hochskalierten Luminanz-Einzelbildes und des hochskalierten Chrominanz-Einzelbildes, um das hochskalierte Einzelbild zu erzeugen.

10. Verfahren nach Anspruch 9, wobei das Hochskalieren der Mehrzahl von Farbkanälen des Einzelbildes zum Erzeugen des hochskalierten Chrominanz-Einzelbildes ein Hochskalieren der Mehrzahl von Farbkanälen des Einzelbildes zum Erzeugen des hochskalierten Chrominanz-Einzelbildes ohne Verwendung eines neuronalen Netzwerks umfasst.

11. Verfahren nach Anspruch 5, wobei das Implementieren, durch das Anzeigemodul (114), des auf einem maschinellen Lernen basierten Algorithmus (210) zum Hochskalieren des Einzelbildes zum Erzeugen des hochskalierten Einzelbildes ein Implementieren, durch eine Zeitsteuereinheit (116, 204) des Anzeigemoduls (114), des auf einem maschinellen Lernen basierten Algorithmus (210) zum Hochskalieren des Einzelbildes zum Erzeugen des hochskalierten Einzelbildes umfasst.

12. Ein oder mehrere computerlesbare Medien, die eine Mehrzahl von Anweisungen umfassen, die darin gespeichert sind und die, wenn sie ausgeführt werden, die Computervorrichtung veranlassen das Verfahren nach einem der Ansprüche 5 bis 11 durchzuführen.

## Revendications

1. Module d'affichage (114), comprenant :
un contrôleur de synchronisation (116, 204) pour :
recevoir une image destinée à être affichée sur un écran d'affichage (118) ;
mettre en œuvre un algorithme à base d'apprentissage machine (210) pour mettre l'image à l'échelle supérieure, pour générer une image mise à l'échelle supérieure ; et
envoyer l'image mise à l'échelle supérieure à l'écran d'affichage (118),
dans lequel le fait de mettre en œuvre l'algorithme à base d'apprentissage machine (210) comprend les faits :
de mettre à l'échelle supérieure (304) un canal de luminance de l'image en utilisant un réseau neuronal convolutif pour générer une image de luminance mise à l'échelle supérieure ;
de mettre à l'échelle supérieure (310) une pluralité de canaux de couleur de l'image pour générer une image de chrominance mise à l'échelle supérieure sans utilisation d'un réseau neuronal ; et
combiner (312) l'image de luminance mise à l'échelle supérieure et l'image de chrominance mise à l'échelle supérieure pour générer l'image mise à l'échelle supérieure.

2. Module d'affichage (114) de la revendication 1, dans lequel l'algorithme à base d'apprentissage machine (210) comprend un réseau neuronal convolutif.

3. Module d'affichage (114) de la revendication 1, dans lequel le contrôleur de synchronisation (116, 204) est capable d'utiliser l'algorithme à base d'apprentissage machine (210) pour mettre à l'échelle supérieure des images d'une résolution d'environ 1920 x 1080 à une résolution d'environ 3840 x 2160 à environ 60 images par seconde en utilisant moins d'environ 150 milliwatts de puissance.

4. Module d'affichage (114) de la revendication 1, dans lequel le contrôleur de synchronisation (116, 204) doit : recevoir un premier segment de l'image ; et mettre en œuvre l'algorithme à base d'apprentissage machine (210) pour mettre à l'échelle supérieure le premier segment de l'image tout en recevant un second segment de l'image.

5. Procédé, comprenant les faits :
de générer, par un dispositif informatique, une image ;
d'envoyer, par le dispositif informatique, l'image à un module d'affichage (114) ;
de mettre en œuvre, par le module d'affichage (114), un algorithme à base d'apprentissage machine (210) pour mettre l'image à l'échelle supérieure, pour générer une image mise à l'échelle supérieure ; et
d'afficher, par le module d'affichage (114), l'image mise à l'échelle supérieure sur un écran d'affichage (118) du module d'affichage (114) ;
de déterminer (502), par le dispositif informatique et avant de générer l'image, de commencer la mise en œuvre de la mise à l'échelle supérieure ; et
de changer (514), par le dispositif informatique, et en réponse à la détermination de commencer la mise en œuvre de la mise à l'échelle supérieure, une largeur de bande d'une liaison entre le module d'affichage (114) et un autre composant du dispositif informatique.

6. Procédé de la revendication 5, dans lequel l'algorithme à base d'apprentissage machine (210) comprend un réseau neuronal convolutif.

7. Procédé de la revendication 5, dans lequel le module d'affichage (114) est capable d'utiliser l'algorithme à base d'apprentissage machine (210) pour mettre à l'échelle supérieure des images d'une résolution d'environ 1920 x 1080 à une résolution d'environ 3840 x 2160 à environ 60 images par seconde en utilisant moins d'environ 150 milliwatts de puissance.

8. Procédé de la revendication 5, comprenant en outre les faits :
de recevoir, par le module d'affichage (114), un premier segment de l'image ; et
de mettre en œuvre, par le module d'affichage (114), l'algorithme à base d'apprentissage machine (210) pour mettre à l'échelle supérieure le premier segment de l'image tout en recevant un second segment de l'image.

9. Procédé de la revendication 5, dans lequel le fait de mettre en œuvre l'algorithme à base d'apprentissage machine (210) comprend les faits :
de mettre à l'échelle supérieure (304) un canal de luminance de l'image en utilisant un réseau neuronal convolutif pour générer une image de luminance mise à l'échelle supérieure ;
de mettre à l'échelle supérieure (310) une pluralité de canaux de couleur de l'image pour générer une image de chrominance mise à l'échelle supérieure ; et
de combiner (312) l'image de luminance mise à l'échelle supérieure et l'image de chrominance mise à l'échelle supérieure pour générer l'image mise à l'échelle supérieure.

10. Procédé de la revendication 9, dans lequel le fait de mettre à l'échelle supérieure la pluralité de canaux de couleur de l'image pour générer l'image de chrominance mise à l'échelle supérieure comprend le fait de mettre à l'échelle supérieure la pluralité de canaux de couleur de l'image pour générer l'image de chrominance mise à l'échelle supérieure sans utilisation d'un réseau neuronal.

11. Procédé de la revendication 5, dans lequel le fait de mettre en œuvre, par le module d'affichage (114), l'algorithme à base d'apprentissage machine (210) pour mettre l'image à l'échelle supérieure, pour générer l'image mise à l'échelle supérieure, comprend le fait de mettre en œuvre, par un contrôleur de synchronisation (116, 204) du module d'affichage (114), l'algorithme à base d'apprentissage machine (210) pour mettre l'image à l'échelle supérieure, pour générer l'image mise à l'échelle supérieure.

12. Support ou supports lisible(s) par ordinateur, comprenant une pluralité d'instructions stockées sur celui ou ceux-ci qui, lorsqu'elles sont exécutées, amènent un dispositif informatique à réaliser le procédé de quelconques des revendications 5 à 11.
